# EUROPEAN PATENT APPLICATION

(11) **EP 3 584 100 A1**
(43) Date of publication of application: **25.12.2019**
(21) Application number: 18382453.1
(22) Date of filing: 20.06.2018
(51) Int. Cl.: B60J 7/16

(54) **POP-UP ROOF FOR VEHICLES**

(71) Applicant: Ekide, S.L., 20500 Arrasate (ES)
(72) Inventor: ZABALA LLONA, Meñaka, 20540 ESKORIATZA (ES); DIAZ OCHANDIANO, Iban, 20540 Eskoriatza (ES)
(74) Representative: Igartua, Ismael

(57) **Abstract**

Pop-up roof comprising a fixed portion (1), a movable portion (2) that can move with respect to the fixed portion (1), and an actuator (3) for causing said movement which is associated with both portions (1, 2). The roof (100) comprises a transmission mechanism (5) whereby the actuator (3) is associated with a portion (1, 2) of the roof (100), the mechanism (5) being attached with rotational freedom to said portion (1, 2) at a first attachment point of said transmission mechanism (5), and said actuator (3) being attached to said mechanism (5) at a second attachment point of said mechanism (5). The mechanism (5) is configured to rotate with respect to the first attachment point when the actuator (3) is actuated, and to push against the portion (1, 2) to which it is not attached for separating both portions (1, 2).

## Description

### TECHNICAL FIELD

The present invention relates to pop-up roofs for vehicles such as vans, caravans, and/or motorhomes, for example.

### PRIOR ART

Pop-up roofs for vehicles (vans, caravans, and/or motorhomes, for example) are known. Roofs of this type comprise a fixed roof portion which is fixed to the vehicle, and a movable roof portion that can move with respect to the fixed portion between a stowed position and an extended position. A wall made of a flexible material which is tautened in the extended position and folds up in the stowed position (closed or stowed roof) is extended between the two roof portions.

Generally, roofs of this type comprise a hinge mechanism and an additional mechanism to cause the opening of the roof (movement of the movable roof portion from the stowed position to the extended position). The additional mechanism generally comprises a hydraulic drive, such as the one disclosed in DE102006057509A1, connected to both roof portions of the pop-up roof. When the actuator is operated or actuated, it extends, causing the opening of the pop-up roof.

### DISCLOSURE OF THE INVENTION

The object of the invention is to provide a pop-up roof for vehicles as defined in the claims.

The roof comprises a fixed roof portion, a movable roof portion that can move with respect to the fixed roof portion, and an actuator configured to cause the movement of the movable roof portion from a stowed position to an extended position, and associated at a first end with one of said roof portions and at a second end with the other roof portion. When the movable roof portion is in the stowed position the roof is stowed away, and when the movable roof portion is in extended position the roof pops up or is extended.

The roof further comprises a transmission mechanism through which the first end of the actuator is associated with the corresponding roof portion. The transmission mechanism is attached with rotational freedom to said roof portion at at least a first attachment point of said transmission mechanism, and the first end of the actuator is attached to said transmission mechanism at at least a second attachment point of said transmission mechanism, different from the first attachment point. The transmission mechanism is configured to rotate with respect to the first attachment point when the actuator is actuated with the roof stowed away, and to push against the roof portion to which it is not attached in the direction opposite the roof portion to which it is attached.

Therefore, with the pushing, the transmission mechanism also exerts a force so that it intervenes in the deployment of the roof, aiding the force exerted by the actuator, such that the force requirements of the required actuator are reduced and an actuator with a lower force, and therefore one that is more cost-effective, can be used. Furthermore, this is achieved in a simple manner by means of only a transmission mechanism and its corresponding attachments.

These and other advantages and features of the invention will become evident in view of the drawings and detailed description of the invention.

### DESCRIPTION OF THE DRAWINGS

Figure 1 shows a preferred embodiment of the pop-up roof of the invention, assembled on a vehicle and deployed.
Figure 2 partially shows the pop-up roof of Figure 1, with a movable roof portion of the pop-up roof in a stowed position.
Figure 3 shows a transmission mechanism of the pop-up roof of Figure 1 in greater detail.
Figure 4 partially shows the pop-up roof of Figure 1, with a first support area of the transmission mechanism of said pop-up roof exerting a force against one of the roof portions.
Figure 5 partially shows the pop-up roof of Figure 1, with a second support area of the transmission mechanism of said pop-up roof exerting a force against one of the roof portions.
Figure 6 partially shows the pop-up roof of Figure 1, with a third support area of the transmission mechanism of said pop-up roof exerting a force against one of the roof portions.

### DETAILED DISCLOSURE OF THE INVENTION

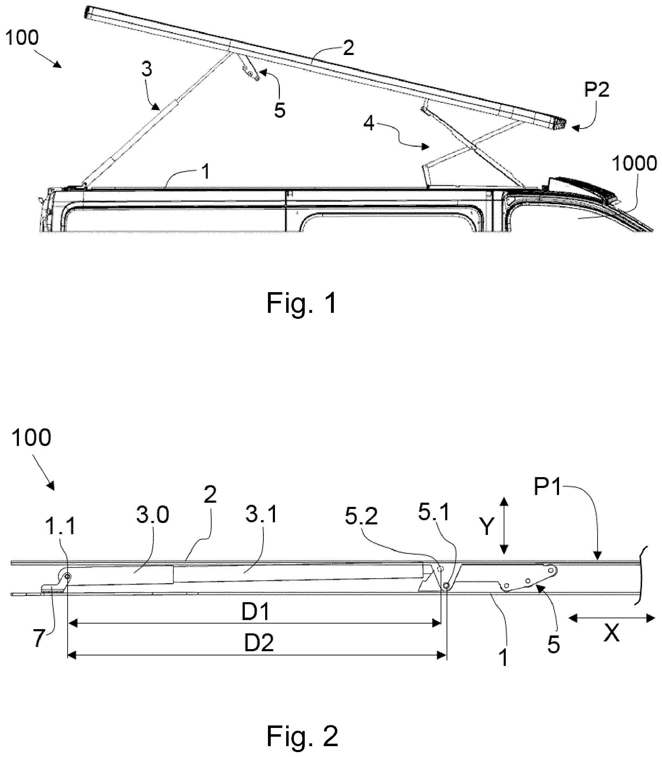

The drawings show a preferred embodiment of the pop-up roof 100 of the invention suitable for camper-type vehicles 1000, such as caravans, or motorhomes, or vans as shown by way of example in Figure 1. The roof 100 comprises a fixed roof portion 1, a movable roof portion 2 that can move with respect to the fixed roof portion 1, an actuator 3 configured to cause the movement of the movable roof portion 2 from a stowed position P1, in which the roof 100 is stowed away, to an extended position P2, in which the roof 100 pops up or is deployed, and preferably a hinge mechanism 4 attached to both roof portions 1 and 2 to make said movement easier. Under normal conditions, the movable roof portion 2 is in the stowed position P1, the roof 100 thereby being stowed away. When the roof 100 is to be popped up, movement of the movable roof portion 2 with respect to the fixed roof portion 1 is caused by means of the actuator 3.

The actuator 3 is associated at a first end with one of the roof portions 1 and 2 and at a second end with the other one of the roof portions 1 and 2. So when the actuator 3 is actuated and extends or is stowed away, said actuator 3 causes movement of the movable roof portion 2 with respect to the fixed roof portion 1 from the stowed position P1 to the extended position P2 or vice versa.

The roof 100 further comprises a transmission mechanism 5 through which the first end of the actuator 3 is associated with the corresponding roof portion 1 or 2. The transmission mechanism 5 is attached with rotational freedom to said roof portion 1 or 2 at at least a first attachment point 5.1 of said transmission mechanism 5, and the first end of the actuator 3 is attached to said transmission mechanism 5 at at least a second attachment point 5.2 of said transmission mechanism 5, different from the first attachment point 5.1. The second end of the actuator 3 is attached to the other roof portion 1 or 2 preferably by means of a specific attachment element 7 which is fixed to said roof portion 1 or 2 or which is part of said roof portion 1 or 2. The actuator 3 is attached to the attachment element 7 with rotational freedom, thereby being associated with or attached to the corresponding roof portion 1 or 2 with rotational freedom. The transmission mechanism 5 is in turn attached to the corresponding roof portion 1 or 2 through an attachment element 6 which is fixed to said roof portion 1 or 2 or which is part of said roof portion 1 or 2 (as occurs in the preferred embodiment shown in the drawings), and the transmission mechanism 5 is attached with rotational freedom to the attachment element 6 at the first attachment point 5.1.

The transmission mechanism 5 is configured to rotate with respect to the first attachment point 5.1 when the actuator 3 is actuated with the roof 100 stowed away, and to push against the roof portion 1 or 2 to which it is not attached in the direction opposite the roof portion 1 or 2 to which it is attached. The transmission mechanism 5 therefore also intervenes in the movement of the movable roof portion 2 to its extended position, helping the actuator 3. When the movable roof portion 2 is in the stowed position P1, the actuator 3 is in its most horizontal position. The more horizontal the actuator 3 is, the larger the force it will require to lift up the movable roof portion 2, so this help of the transmission mechanism 5 at the start of the movement of said movable roof portion 2 from its stowed position P1 is particularly advantageous to enable reducing the force requirements of the actuator 3. An actuator 3 with lower force requirements, which entails a size reduction (which is important in roofs 100 of this type), in addition to a cost reduction, can therefore be used.

In the preferred embodiment, the transmission mechanism 5 is attached to the movable roof portion 2, the first end of the actuator 3 therefore being associated with said movable roof portion 2 through said transmission mechanism 5, and the second end of the actuator 3 is associated with the fixed roof portion 1 (through the attachment element 7), although in other embodiments this could be the other way around. For the sake of clarity but in a non-limiting manner, the invention will be explained hereinafter considering the attachments described for the preferred embodiment.

The second end of the actuator 3 is attached to the transmission mechanism 5, particularly to the second attachment point 5.2 of said transmission mechanism 5. This causes the movement of said second attachment point 5.2 when the actuator 3 is actuated, extending same. This movement is converted into a rotation of the transmission mechanism 5 with respect to the attachment point 5.1, which is the only possible movement of said transmission mechanism 5. The actuator 3 preferably comprises a cylinder with a base 3.0 and a piston 3.1 that can move with respect to the base 3.0, the piston 3.1 extending or retracting when said actuator 3 is actuated (it extends to bring the movable roof portion 2 to the extended position P2 and retracts or contracts to bring said movable roof portion 2 to the stowed position P1). Furthermore, the actuator 3 is preferably an electrically actuated actuator which is furthermore more compact and cost-effective than actuators 3 of another type (hydraulic and pneumatic actuators, for example). The piston 3.1 preferably comprises the first end of the actuator 3, said piston 3.1 thereby being attached to the second attachment point 5.2 of the transmission mechanism 5.

The transmission mechanism 5 preferably comprises a main member 5.0 comprising the attachment points 5.1 and 5.2, said main member 5.0 being attached with rotational freedom to the corresponding roof portion 1 or 2 (preferably through the attachment element 6), and therefore rotating with respect to the first attachment point 5.1 when the transmission mechanism 5 rotates. The transmission mechanism 5 (the main member 5.0) is configured such that the first attachment point 5.1 and the second attachment point 5.2 are misaligned with respect to one another in a longitudinal direction X parallel to the fixed roof portion 1, and in a transverse direction Y perpendicular to the longitudinal direction X, when the movable roof portion 2 is in the stowed position P1. This assures rotation of the transmission mechanism 5 with respect to the first attachment point 5.1 when the actuator 3 is actuated with the movable roof portion 2 in the stowed position P1.

The second end of the actuator 3 is attached to an attachment point 1.1 of the fixed roof portion 1 (in the preferred embodiment) preferably by means of an attachment element 7 which is fixed to the fixed roof portion 1 or which is part of said fixed roof portion 1, the distance D1 between the orthogonal projection of the attachment point 1.1 in the fixed roof portion 1 and the orthogonal projection of the first attachment point 5.1 in the fixed roof portion 1 being different from (preferably smaller than) the distance D2 between said orthogonal projection of the attachment point 1.1 and the orthogonal projection of the second attachment point 5.2 in said fixed roof portion 1, when the movable roof portion 2 is in the stowed position P1. This assures to an even greater extent rotation of the transmission mechanism 5 with respect to the first attachment point 5.1 when the actuator 3 is actuated with the movable roof portion 2 in the stowed position P1, and further assures minimal effort on the part of the actuator 3.

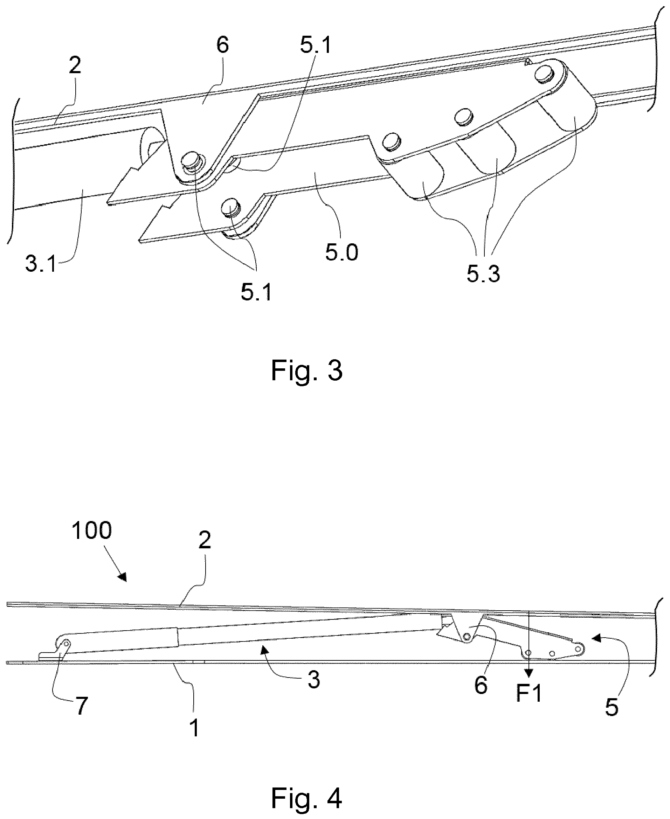

The transmission mechanism 5 further comprises at least one support area 5.3, shown in more detail in Figure 3, which can be in contact with the roof portion 1 or 2 to which the transmission mechanism 5 is attached when the movable roof portion 2 is in the stowed position P1, or which may be separated from said roof portion 1 or 2 with the movable roof portion 2 in said stowed position P1. To make it easier to push against the corresponding roof portion 1 or 2 and to make the movement of the main member 5.0 along said roof portion 1 or 2 during rotation thereof easier, the transmission mechanism 5 may comprise a roller acting as a support area 5.3, such as in the preferred embodiment, in which case it will be attached with rotational freedom to the main member 5.0 and projecting from said main member 5.0 to come into contact with the corresponding roof portion 1 or 2, where appropriate, although the support area 5.3 could alternatively be a surface of the main member 5.0. The main member 5.0 is configured so that the support area 5.3 pushes against the roof portion 1 or 2 to which the transmission mechanism 5 is not attached with a given force F1 (see Figure 4) when the actuator 3 is actuated with the movable roof portion 2 in the stowed position P1, with the rotation of the main member 5. When the transmission mechanism 5 comprises a roller in the form of a support area 5.3, the main member 5 is configured for the roller to be attached thereto to enable exerting said force F1, where appropriate.

The support area 5.3 therefore levers up the corresponding roof portion 1 or 2, helping the movement of the movable roof portion 2 with respect to the fixed roof portion 1 at first. In the embodiment as described above, the main member 5.0 is preferably attached to the movable roof portion 2 such that the support area 5.3 levers up the fixed roof portion 1.

The main member 5.0 or the transmission mechanism 5 preferably comprises a plurality of support areas 5.3, as shown in the drawings (where a main member 5.0 with three support areas 5.3 is shown). The main member 5.0 is configured so that each support area 5.3 is arranged at a specific separating distance with respect to said roof portion 1 or 2 when the movable roof portion 2 is in the stowed position P1, all the separating distances being different from one another. Furthermore, said support areas 5.3 are distributed in the main member 5.0 in a specific manner, such that they exert a corresponding force F1, F2, and F3 against said roof portion 1 or 2 at different moments of rotation of the main member 5.0, during the actuation of the actuator 3. This allows them to act like a lever in a plurality of positions of rotation of said main member 5.0 at different moments of actuation of the actuator 3, helping the actuator 3 in each of said positions.

An explanation of how to pop the roof 100 up, starting from a situation in which the roof 100 is stowed away, is provided below in reference to the preferred embodiment. If the roof 100 is to be popped up, the actuator 3 is actuated and it starts to exert a force against the main member 5.0. This force causes the rotation of the main member 5.0 with respect to the attachment point 5.1, and this rotation causes a support area 5.3 of the main member 5.0 to exert a force F1 against the fixed roof portion 1 and to act like a lever, helping the actuator 3 to move the movable roof portion 2 away from said fixed roof portion 1. If the main member 5.0 does not have more support areas 5.3, as the actuator 3 continues to extend, the main member 5.0 will continue to rotate, and there will come a time when said support area 5.3 will is no longer in contact with the fixed roof portion 1, the force exerted by the actuator 3 will henceforth be the only force that will cause the movable roof portion 2 to pop up.

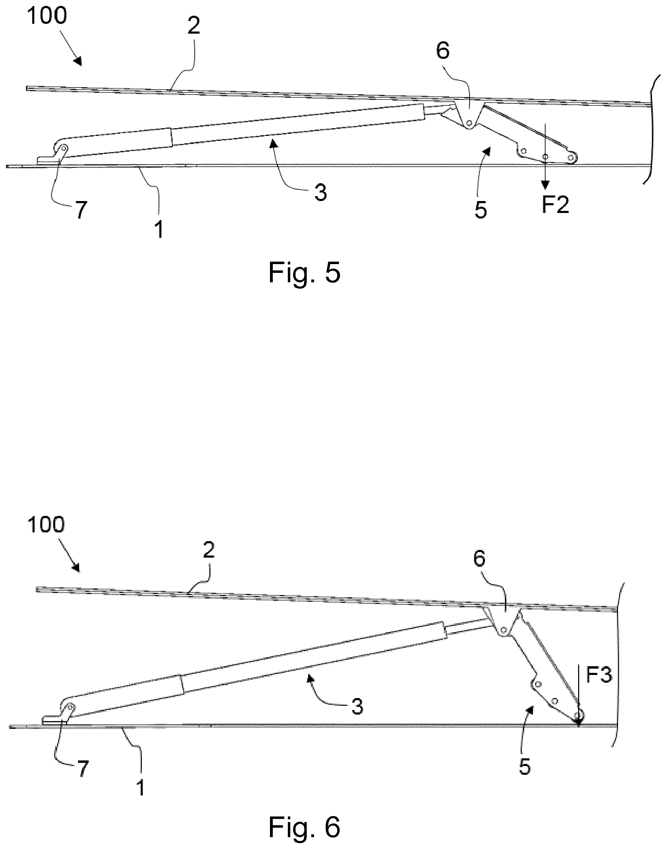

However, if the main member 5.0 has more support areas 5.3 (as in the case of the preferred embodiment shown in the drawings), when the main member 5.0 is no longer in contact with the fixed roof portion 1, a second support area 5.3 comes into contact with said fixed roof portion 1 and exerts a force F2 against said fixed roof portion 1 (Figure 5), helping the actuator 3. As the actuator 3 continues to extend, the main member 5.0 will continue to rotate, and there will come a time when said second support area 5.3 will no longer be in contact with the fixed roof portion 1. A third support area 5.3 then comes into contact with said fixed roof portion 1 and exerts a force F3 against said fixed roof portion 1 (Figure 6), helping the actuator 3. As the actuator 3 continues to extend, the main member 5.0 will continue to rotate and there will come a time when said second support area 5.3 is no longer in contact with the fixed roof portion 1. In the preferred embodiment, since there are no more support areas, the force exerted by the actuator 3 will henceforth be the only force that will move the movable roof portion 2 until said movable roof portion 2 reaches the extended position P2 shown in Figure 1 (preferably the maximum stroke of the actuator 3).

The actuator 3 is attached to the fixed roof portion 1 with rotational freedom, such that the farther away the movable roof portion 2 moves from the fixed roof portion 1, the more vertical the actuator 3 will be arranged, and the more vertical the actuator 3 is, the lower the force it will require to move the movable roof portion 2. So as many support areas 5.3 as deemed necessary can be arranged in order to have an actuator 3 with lower force requirements, although it must be taken into account that the more support areas 5.3 there are, the bulkier the transmission mechanism 5 will be.

In summary, the pop-up roof 100 of the invention offers two phases of movement of the movable roof portion 2: a first phase in which the transmission mechanism 5 helps to separate said movable roof portion 2 from the fixed roof portion 1 as a result of the force (or forces F1, F2, and F3) it exerts against the corresponding roof portion 1 or 2, and a second phase in which said movement is caused by the actuator 3 alone.

## Claims

1. Pop-up roof for vehicles, comprising a fixed roof portion (1), a movable roof portion (2) that can move with respect to the fixed roof portion (1), and an actuator (3) which is configured to cause the movement of the movable roof portion (2) from a stowed position (P1) to an extended position (P2) and vice versa, and which is associated at a first end with one of said roof portions (1, 2) and at a second end with the other one of said roof portions (1, 2), **characterized in that** the roof (100) further comprises a transmission mechanism (5) through which the first end of the actuator (3) is associated with the corresponding roof portion (1, 2), the transmission mechanism (5) being attached with rotational freedom to said roof portion (1, 2) at at least a first attachment point (5.1) of said transmission mechanism (5), and the first end of the actuator (3) being attached to said transmission mechanism (5) at at least a second attachment point (5.2) of said transmission mechanism (5), different from the first attachment point (5.1), said transmission mechanism (5) being configured to rotate with respect to the first attachment point (5.1) when the actuator (3) is actuated with the movable roof portion (2) in the stowed position (P1), and to push against the roof portion (1, 2) to which the transmission mechanism (5) is not attached, in the direction opposite the roof portion (1, 2) to which it is attached, with said rotation.

2. Pop-up roof according to claim 1, wherein the first attachment point (5.1) and the second attachment point (5.2) of the transmission mechanism (5) are misaligned in a longitudinal direction (X) parallel to the fixed roof portion (1) and in a transverse direction (Y) perpendicular to the longitudinal direction (X).

3. Pop-up roof according to claim 2, wherein the second end of the actuator (3) is attached to an attachment point (1.1) of the roof portion (1, 2) with which it is associated, the distance (D1) between the projection of the attachment point (1.1) in the roof portion (1, 2) to which the first end of the actuator (3) is attached and the orthogonal projection of the first attachment point (5.1) in said roof portion (1, 2) being smaller than the distance (D2) between said projection of the attachment point (1.1) and the orthogonal projection of the second attachment point (5.2) in said roof portion (1, 2) when the movable roof portion (2) is in the stowed position (P1).

4. Pop-up roof according to any of claims 1 to 3, wherein the transmission mechanism (5) comprises at least one support area (5.3) and is configured so that said support area (5.3) pushes against the roof portion (1, 2) to which said transmission mechanism (5) is not attached, in the direction opposite the other roof portion (1, 2), when actuation of the actuator (3) is caused for transitioning the movable roof portion (2) to the extended position (P2) starting from said movable roof portion (2) in the stowed position (P1).

5. Pop-up roof according to claim 4, wherein the transmission mechanism (5) comprises a main member (5.0) comprising the first attachment point (5.1) and the second attachment point (5.2), the main member (5.0) being attached with rotational freedom to the corresponding roof portion (1, 2), and rotating with respect to the first attachment point (5.1), the transmission mechanism (5) further comprising a roller acting like a support area (5.3), which is attached with rotational freedom to the main member (5.0) and projects from said main member (5.0).

6. Pop-up roof according to claim 4, wherein the transmission mechanism (5) comprises a main member (5.0) comprising the first attachment point (5.1) and the second attachment point (5.2), the main member (5.0) being attached with rotational freedom to the corresponding roof portion (1, 2), and rotating with respect to the first attachment point (5.1), said main member (5.0) comprising a surface acting like a support area (5.3).

7. Pop-up roof according to claim 5 or 6, wherein the transmission mechanism (5) comprises a plurality of support areas (5.3) which are arranged at different separating distances with respect to the roof portion (1, 2) to which the transmission mechanism (5) is not attached, when the movable roof portion (2) is in the stowed position (P1) by different distances, said support areas (5.3) being distributed and configured in such a way in the transmission mechanism (5) that they come into contact with said roof portion (1, 2) at different moments during the rotation of said transmission mechanism (5) with respect to the first attachment point (5.1).

8. Pop-up roof according to any of claims 5 to 7, comprising an attachment element (6) fixed to the roof portion (1, 2) with which the transmission mechanism (5) is associated or which is part of said roof portion (1, 2), the main member (5.0) of the transmission mechanism (5) being attached to said attachment element (6) with rotational freedom.

9. Pop-up roof according to any of claims 1 to 8, comprising an attachment element (7) fixed to the roof portion (1, 2) with which the second end of the actuator (3) is associated or which is part of said roof portion (1, 2), the second end of the actuator (3) being attached with rotational freedom to said attachment element (7).

10. Pop-up roof according to any of claims 1 to 9, wherein the actuator (3) comprises a cylinder with a base (3.0) and a piston (3.1) that can move with respect to the base (3.0).

11. Pop-up roof according to claim 10, wherein the piston (3.1) of the actuator (3) comprises the first end of said actuator (3), said piston (3.1) being attached to the second attachment point (5.2) of the transmission mechanism (5).

12. Pop-up roof according to any of claims 1 to 11, wherein the actuator (3) is an electric actuator.
